# EUROPÄISCHE PATENTANMELDUNG

(11) **EP 0 540 911 A1**
(43) Veröffentlichungstag der Anmeldung: **12.05.1993**
(21) Anmeldenummer: 92117514.7
(22) Anmeldetag: 14.10.1992
(51) Int. Cl.: F16D 1/08, F16C 3/28

(54) **Spannsatz**

(30) Priorität: 02.11.1991 DE 4136216
(71) Anmelder: SCHULER PRESSEN GmbH & Co., D-73033 Göppingen (DE)
(72) Erfinder: Bareis, Alfred, W-7336 Uhingen (DE); Abt, Wilfried, W-7324 Rechberghausen (DE); Augst, Rudolf, W-7326 Heiningen (DE); Czapka, Robert, W-7332 Eislingen (DE); Pfisterer, Horst, W-7320 Göppingen (DE)

(57) **Zusammenfassung**

Spannsatz, dessen innerer Konusring (3) mit seiner zylindrischen Innenumfangsfläche unmittelbar oder mittelbar auf einer zylindrischen Außenumfangsfläche eines angetriebenen Wellenabschnittes (1) sitzt und dessen äußerer Konusring (4) auf der konischen Außenumfangsfläche des inneren Konusringes (3) sitzt, mit zu dem Wellenabschnitt (1) koaxialen Spannschrauben (5), mittels derer die Konusringe (3, 4) miteinander und der innere Konusring (3) mit dem Wellenabschnitt (1) verspannbar sind, wobei die Paarung der zylindrischen Innen-/Außenumfangsflächen über in mindestens einer dieser zylindrischen Flächen vorgesehene Nuten (6) mit einem flüssigen Druckmittel beaufschlagbar ist. Um einen solchen Spannsatz leicht montierbar und ohne Lösen der Spannschrauben (5) entspannbar zu gestalten, wird vorgeschlagen, daß auf dem Wellenabschnitt (1) eine Abtriebshülse (2, 3) sitzt, deren axiale Länge mindestens um die axiale Länge eines Abtriebsorgans (2) größer ist als die axiale Länge der Konusringe (3,4) und daß die Beaufschlagung der Paarung der zylindrischen Flächen mit Druckmittel als Lösehydraulik für die Verspannung zwischen dem Wellenabschnitt (1) und der Abtriebshülse (2, 3) ausgebildet ist.

## Beschreibung

Die Erfindung bezieht sich auf einen Spannsatz, dessen innerer Konusring mit seiner zylindrischen Innenumfangsfläche unmittelbar oder mittelbar auf einer zylindrischen Außenumfangsfläche eines angetriebenen Wellenabschnittes sitzt und dessen äußerer Konusring auf der komischen Außenumfangsfläche des inneren Konusringes sitzt, mit zu dem Wellenabschnitt koaxialen Spannschrauben, mittels derer die Konusringe miteinander und der innere Konusring mit dem Wellenabschnitt verspannbar sind, wobei die Paarung der zylindrischen Innen-/Außenumfangsflächen über in mindestens einer dieser zylindrischen Flächen vorgesehene Nuten mit einem flüssigen Druckmittel beaufschlagbar ist.

Ein bekannter Spannsatz dieser Art (DE-PS 33 05 538) dient dazu, auf dem Wellenabschnitt ein äußeres Bauteil, wie die Nabe einer Bandantriebstrommel, drehmomentübertragend zu verspannen. Die axiale Länge des Spannsatzes und insbesondere seiner Konusringe ist dabei gleich der oder kleiner als die axiale(n) Länge des äußeren Bauteils, das den Wellenabschnitt umschließt. Hierbei erfolgt eine Beaufschlagung mit flüssigem Druckmittel nicht nur in einer Paarung zylindrischer Innen-/Außenumfangsflächen, sondern auch in der Paarung zusammenwirkender, konischer Innen-/Außenumfangsflächen der Konusringe zu dem Zweck, die Reibungswiderstände in den Paarungen der beaufschlagten Flächen zu verringern, um mit geringeren axialen Kräften in den Spannschrauben größere radiale Spannkräfte des Spannsatzes zwischen dem Wellenabschnitt und dem äußeren Bauteil aufbringen und damit ein größeres Drehmoment übertragen zu können.

Demgegenüber ist es Aufgabe der Erfindung, für die drehmomentübertragende Befestigung eines axial neben den Konusringen auf dem Wellenabschnitt angeordneten Abtriebsorgans einen einfach montierbaren Spannsatz zu schaffen, der ohne Lösen der Spannschrauben zwecks Veränderung der Winkellage des Abtriebsorgans auf dem Wellenabschnitt entspannt werden kann.

Diese Aufgabe ist bei einem Spannsatz der eingangs genannten Art dadurch gelöst, daß auf dem Wellenabschnitt eine Abtriebshülse sitzt, deren axiale Länge mindestens um die axiale Länge eines Abtriebsorgans größer ist als die axiale Länge der Konusringe, und daß die Beaufschlagung der Paarung der zylindrischen Flächen mit Druckmittel als Lösehydraulik für die Verspannung zwischen dem Wellenabschnitt und der Abtriebshülse ausgebildet ist. Hierbei genügt es, wenn die der Zufuhr von flüssigem Druckmittel dienenden Nuten nur in den axialen Bereichen der Konusringe angeordnet sind, da nur in diesen Bereichen die Funktion der Lösehydraulik benötigt wird. Die übrigen Abschnitte der Abtriebshülse sind unverspannt und folglich ohnehin auf dem Wellenabschnitt verdrehbar.

Eine besonders einfache, allerdings in der Regel eine Einzelanfertigung erfordernde Ausgestaltung des Spannsatzes besteht darin, daß mindestens ein axial außerhalb des Abtriebsorgans liegender Abschnitt der Abtriebshülse selbst als innerer Konusring ausgebildet ist, auf dem dann der äußere Konusring sitzt.

Serienmäßig hergestellte Konusringe können dagegen bei einer Ausgestaltung verwendet werden, bei der mindestens ein innerer Konusring auf mindestens einem axial außerhalb des Abtriebsorgans liegenden Abschnitt der Abtriebshülse sitzt.

Eine Anwendungsmöglichkeit des Spannsatzes ergibt sich bei Ausbildung des Abtriebsorgans als Exzenter, auf dem ein Pleuel gelagert sein kann. Durch Verstellung der Winkellage des Exzenters zu dem Wellenabschnitt kann die Lage des Hubes des von dem Pleuel betätigten Gerätes zu der Winkellage des Wellenabschnittes eingestellt werden.

Die gleiche Wirkung ist durch die Anwendung des Spannsatzes zu erzielen, wenn das Abtriebsorgan als verzahntes Rad ausgebildet ist, mit dem ein Zahnrad oder ein Zahnriemen kämmt.

Weitere Anwendungsmöglichkeiten des Spannsatzes ergeben sich dadurch, daß der Wellenabschnitt als Exzenter und die Abtriebshülse als Exzenterbüchse ausgebildet ist. Damit läßt sich die Größe und Lage der resultierenden Exzentrizität verstellen. Damit kann der Hub eines von einem auf der Exzenterbüchse gelagerten Pleuel angetriebenen Gerätes verstellt werden.

Insbesondere wenn große Drehmomente übertragen werden müssen, sind Ausgestaltungen vorteilhaft, bei denen der innere Konusring als Doppel-Konusring mit entgegengesetzten Konizitäten ausgebildet ist und der äußere Konusring aus zwei getrennten, axial beabstandeten Teilringen besteht.

Zum gleichen Zweck können auch auf mindestens einem axial außerhalb des Abtriebsorgans liegenden Abschnitt der Abtriebshülse axial nebeneinander mehrere Doppel-Konusringe angeordnet sein.

Zur Aufnahme mehrerer innerer Konusringe können auch axial außerhalb des Abtriebsorgans liegende Abschnitte der Abtriebshülse axial beiderseits des Abtriebsorgans vorgesehen sein.

In der Zeichnung sind mehrere Ausführungsbeispiele erfindungsgemäßer Spannsätze dargestellt, und zwar zeigen
- Fig. 1: einen Schnitt durch einen Spannsatz für die Befestigung einer Exzenterbüchse auf einem Exzenter,
- Fig. 2: eine Ansicht in axialer Richtung zu Fig. 1,
- Fig. 3: einen Schnitt durch einen anderen Spannsatz für die Befestigung einer Exzenterbüchse auf einem Exzenter,
- Fig. 4: eine Ansicht in axialer Richtung zu Fig. 3,
- Fig. 5: einen Schnitt durch einen Spannsatz für die Befestigung eines Exzenters auf einem Wellenabschnitt,
- Fig. 6: eine Ansicht in axialer Richtung zu Fig. 5,
- Fig. 7: einen Schnitt durch einen Spannsatz für die Übertragung besonders großer Drehmomente auf ein verzahntes Rad.

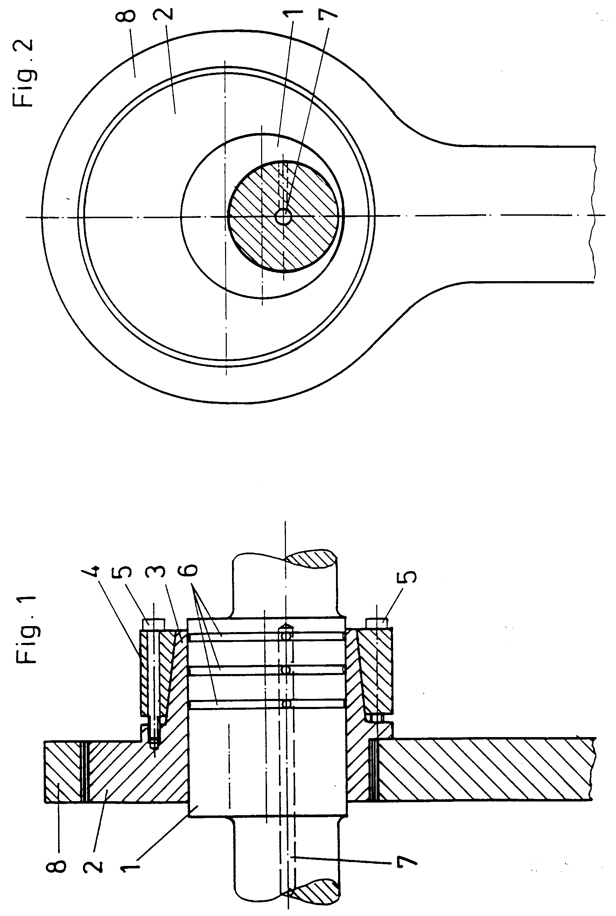

Bei dem Ausführungsbeispiel gemäß Fign. 1 und 2 ist auf dem als Exzenter 1 ausgebildeten Wellenabschnitt eine Abtriebshülse angeordnet, die aus einer Exzenterbüchse 2 und einem als innerem Konusring 3 ausgebildeten Abschnitt besteht. Auf dem inneren Konusring 3 sitzt ein äußerer Konusring 4, der mittels Spannschrauben 5 mit dem inneren Konusring 3 verspannt ist, wodurch die Abtriebshülse auf dem Exzenter 1 verspannt ist. Fur die Lösehydraulik ist in dem Bereich des inneren Konusringes 3 die zylindrische Außenumfangsfläche des Exzenters 1 mit Nuten 6 versehen, die über eine Zentralbohrung 7 mit flüssigem Druckmittel beaufschlagbar sind. Auf der Exzenterbüchse 2 ist ein Pleuel 8 gelagert, der dem Antrieb eines - nicht dargestellten - Gerätes dient.

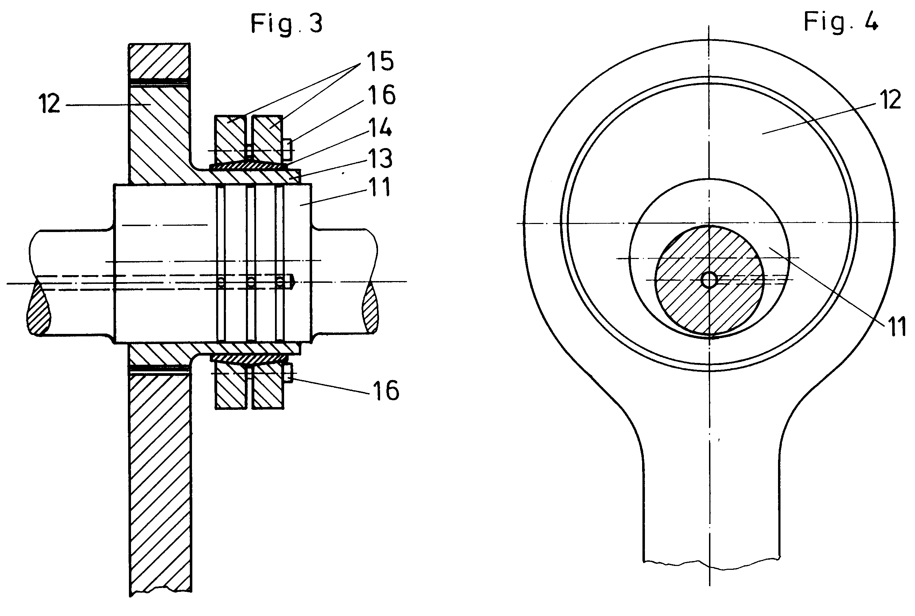

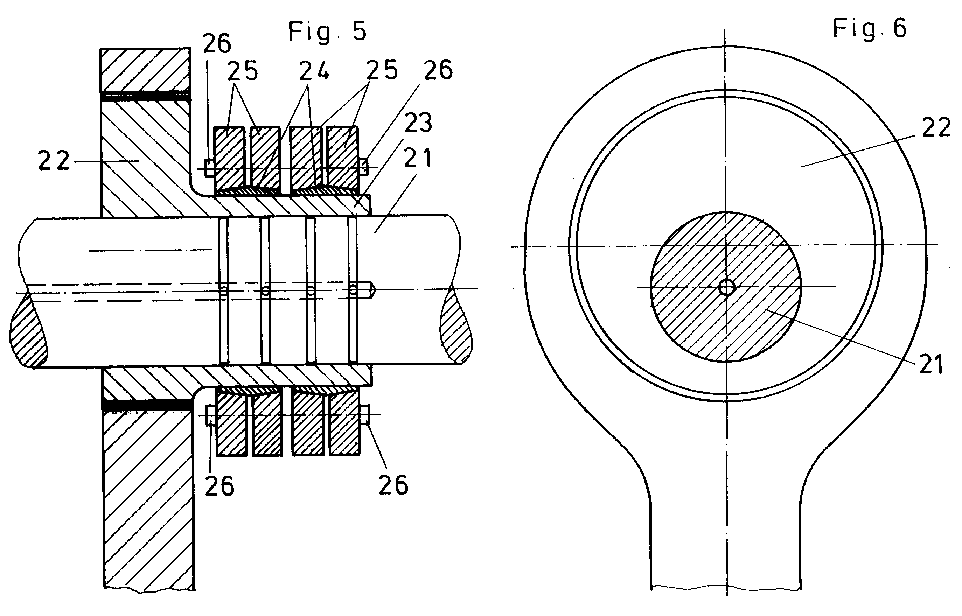

Bei dem Ausführungsbeispiel gemäß Fign. 3 und 4 ist auf dem als Exzenter 11 ausgebildeten Wellenabschnitt eine Abtriebshülse angeordnet, die aus einer Exzenterbüchse 12 und eine daneben liegenden Abschnitt 13 besteht. Auf dem Abschnitt 13 ist ein innerer Doppel-Konusring 14 mit entgegengesetzten Konizitäten angeordnet. Auf diesem sitzen die beiden Teilringe des äußeren Doppel-Konusringes 15, die mittels Spannschrauben 16 gegeneinander verspannbar sind. Nuten, eine Zentralbohrung und ein Pleuel sind wie bei dem Ausführungsbeispiel gemäß Fign. 1 und 2 vorhanden.

Bei dem Ausführungsbeispiel gemäß Fign. 5 und 6 ist auf dem Wellenabschnitt 21 eine Abtriebshülse angeordnet, die aus einem Exzenter 22 und einem daneben liegenden Abschnitt 23 besteht. Auf dem Abschnitt 23 sind zwei innere Doppel-Konusringe 24 mit entgegengesetzten Konizitäten angeordnet. Auf diesen sitzen die je zwei Teilringe der äußeren Doppel-Konusringe 25, die mittels Spannschrauben 26 gegeneinander verspannbar sind. Nuten, eine Zentralbohrung und ein Pleuel sind wie bei den Ausführungsbeispielen gemäß Fign 1, 2 und 3, 4 vorhanden.

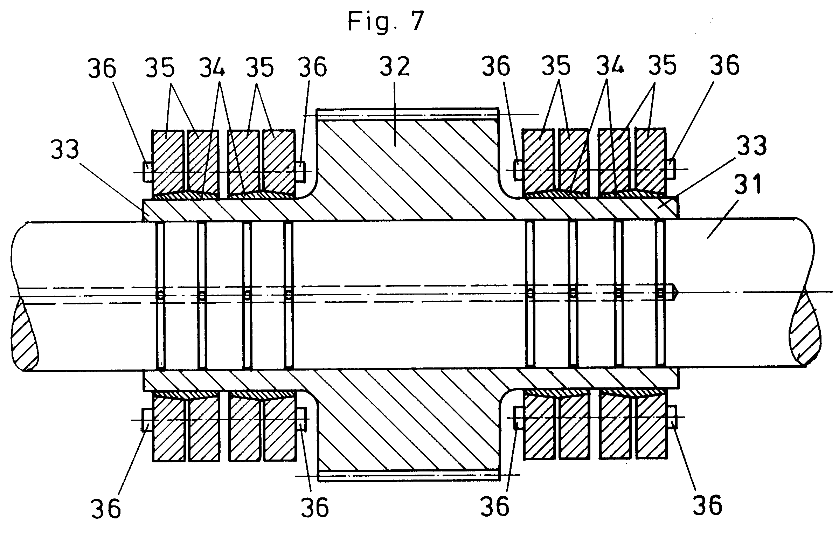

Bei dem Ausführungsbeispiel gemäß Fig. 7 ist auf dem Wellensbschnitt 31 eine Abtriebshülse angeordnet, die aus einem verzahnten Rad 37 und beiderseits daneben liegenden Abschnitten 33 besteht. Auf den Abschnitten 33 sind je zwei innere Doppel-Konusringe 34 mit entgegengesetzten Konizitäten angeordnet. Auf diesen sitzen die je zwei Teilringe der äußeren Doppel-Konusringe 35, die mittels Spannschrauben 36 gegeneinander verspannbar sind. Nuten und eine Zentralbohrung sind wie bei den anderen Ausführungsbeispielen vorhanden.

## Patentansprüche

1. Spannsatz, dessen innerer Konusring mit seiner zylindrischen Innenumfangsfläche unmittelbar oder mittelbar auf einer zylindrischen Außenumfangsfläche eines angetriebenen Wellenabschnittes sitzt und dessen äußerer Konusring auf der konischen Außenumfangsfläche des inneren Konusringes sitzt, mit zu dem Wellenabschnitt koaxialen Spannschrauben, mittels derer die Konusringe miteinander und der innere Konusring mit dem Wellenabschnitt verspannbar sind, wobei die Paarung der zylindrischen Innen-/Außenumfangsflächen über in mindestens einer dieser zylindrischen Flächen vorgesehene Nuten mit einem flüssigen Druckmittel beaufschlagbar ist, **dadurch gekennzeichnet**, daß auf dem Wellenabschnitt (1, 11, 21, 31) eine Abtriebshülse sitzt, deren axiale Länge mindestens um die axiale Länge eines Abtriebsorgans (2, 12, 22, 32) größer ist als die axiale Länge der Konusringe (3/4, 14/15, 24/25, 34/35) und daß die Beaufschlagung der Paarung der zylindrischen Flächen mit Druckmittel als Lösehydraulik für die Verspannung zwischen dem Wellenabschnitt und der Abtriebshülse ausgebildet ist.

2. Spannsatz nach Anspruch 1, **dadurch gekennzeichnet**, daß mindestens ein axial außerhalb des Abtriebsorgans (2) liegender Abschnitt der Abtriebshülse selbst als innerer Konusring (3) ausgebildet ist.

3. Spannsatz nach Anspruch 1, **dadurch gekennzeichnet**, daß mindestens ein innerer Konusring (14, 24, 34) auf mindestens einem axial außerhalb des Abtriebsorgans (12, 22, 32) liegenden Abschnitt (13, 23, 33) der Abtriebshülse sitzt.

4. Spannsatz nach Anspruch 1, 2 oder 3, **dadurch gekennzeichnet**, daß das Abtriebsorgan als Exzenter (22) ausgebildet ist.

5. Spannsatz nach Anspruch 1, 2 oder 3, **dadurch gekennzeichnet**, daß das Abtriebsorgan als verzahntes Rad (32), mit dem ein Zahnrad oder ein Zahnriemen kämmt, ausgebildet ist.

6. Spannsatz nach Anspruch 1, 2 oder 3, **dadurch gekennzeichnet**, daß der Wellenabschnitt als Exzenter (1, 11) und die Abtriebshülse als Exzenterbüchse (2, 12) ausgebildet ist.

7. Spannsatz nach einem der Ansprüche 3 bis 6, **dadurch gekennzeichnet**, daß der innere Konusring als Doppel-Konusring (14, 24, 34) mit entgegengesetzten Konizitäten ausgebildet ist und der äußere Konusring (15, 25, 35) aus zwei getrennten, axial beabstandeten Teilringen besteht.

8. Spannsatz nach Anspruch 7, **dadurch gekennzeichnet**, daß auf mindestens einem axial außerhalb des Abtriebsorgans (22, 32) liegenden Abschnitt (23, 33) der Abtriebshülse axial nebeneinander mehrere Doppel-Konusringe (24/25, 34/35) angeordnet sind.

9. Spannsatz nach einem der Ansprüche 3 bis 8, **dadurch gekennzeichnet**, daß axial außerhalb des Abtriebsorgans (32) liegende Abschnitte (33) der Abtriebshülse axial beiderseits des Abtriebsorgans (32) vorgesehen sind.
